(19) Europäisches Patentamt
European Patent Office
Office européen des brevets

(11) **EP 2 071 945 A1**

(12) **EUROPEAN PATENT APPLICATION**

(43) Date of publication:
**24.06.2009 Bulletin 2009/26**

(51) Int Cl.:
***A01K 63/04*** *(2006.01)*

(21) Application number: **07425816.1**

(22) Date of filing: **21.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Askoll Holding S.r.l.**
**36031 Povolaro di Dueville (Vicenza) (IT)**

(72) Inventor: **Marioni, Elio**
**36031 Deuville (Vicenza) (IT)**

(74) Representative: **Botti, Mario et al**
**Botti & Ferrari S.r.l.,**
**Via Locatelli, 5**
**20124 Milano (IT)**

(54) **Filtering unit for an aquarium, aquarium and control process for an aquarium**

(57) A filtering unit (3) for an aquarium (1) is described, said filtering unit comprising a closed casing (5) and a liquid path extending from the inlet aperture to an outlet aperture, of the forced circulation type, by means of an electric pump (15), provided with an electric motor (16), and comprising electronic control circuits (32) which control the aquarium functions (1).

Furthermore an aquarium is described, comprising said filtering unit (3).

An aquarium control process is also described, comprising the following steps:
- measuring at least one aquarium status variable,
- monitoring the aquarium conditions.

Fig.1

**Description**

<u>Technical field</u>

The present invention relates to a filtering unit for an aquarium, said filtering unit comprising a closed casing and a liquid path extending from the inlet aperture to an outlet aperture, of the forced circulation type, by means of an electric pump (15) provided with an electric motor (16).

Moreover, the invention relates to an aquarium comprising a tank for collecting liquid, said aquarium comprising a filtering unit hydraulically connected to said aquarium.

The invention further relates to a process for automatic control of said aquarium.

<u>Known art</u>

As it is known, an aquarium normally requires a plurality of devices and apparatuses in order to ensure vital functions of fish immersed in a liquid.

A filtering unit is usually employed in order to clean the liquid. Such a filtering unit basically forces the liquid through at least a filtering body which is disposed inside the closed casing of the filtering unit. For instance, some filtering units provide a series connection between a mechanical filtering body comprising a veil type material layer, a chemical filtering body comprising a carbon layer and a biological filtering body comprising a layer of razor clams.

Per se, the filtering unit should be small, for aesthetic reasons as well as space requirements.

The electric pump which forces the liquid inside said path has an electric motor, for instance a synchronous permanent magnet motor, which is controlled by electronic control circuits. Since the synchronous motor is not able to efficiently start up by itself, special start up techniques are required.

Therefore the following two types of synchronous electric pumps are known:

- a mechanically starting electric pump, used in low cost and small sized aquariums,

- an electronically controlled starting electric pump, wherein the electronic control circuits also control the rotating field at start up, optionally provided with a partial winding or starting coil, used in more costly and larger aquariums.

The use of an electric pump for the filtering unit provides the further advantage of acting as a liquid agitating means, which is essential for the survival of fish, since it avoids the formation of marshes.

A thermal regulation group is used in order to allow survival of fish in colder climates with respect to their natural habitat. It normally comprises at least one heater, which includes a resistor for generating heat by Joule effect, which is housed in a casing of heat conducting material, which is immersed in the tank, in order to heat up the liquid.

The thermal regulation group normally comprises electronic circuits for controlling the heaters. Such electronic circuits areoften connected at inlet to a thermometer and user interface comprising a keypad for allowing thermal regulation by the user.

In an aquarium an lighting group is often provided, which is usually comprised of at least one lamp. A switch is often used for the user to switch the light on and off. An electro-mechanical or electronic timer may be provided, which is adjusted by the user by corresponding input means, for setting the desired lighting during the day.

A feeding group comprises a feeding container and means for introducing feed into the tank.

It moreover comprises electronic circuits for controlling the introduction of feed into the liquid. Such electronic circuits are often connected to an user interface comprising a keypad, for setting the feed distribution by the user. A user adjustable timer is optionally provided.

These devices and apparatuses may be remote controlled by a single user interface, comprising a single keypad for the various groups and a small display or LED array. This single user interface is normally secured to the aquarium walls and is connected by means of cables to various control circuits for different group.

External devices are also known, like portable conductivity probes, which provide the user with an instantaneous reading of the liquid conductivity. Based on the conductivity reading, it is possible to determine important parameters, which are vital for fish survival, such as water hardness, in case of freshwater, or salt content, in case of salt water. Parameters exceeding certain values should be recognized or deduced as soon as possible, so that fish don't die.

A generally battery powered traditional portable conductivity probe usually comprises two electrodes, which are inserted into the liquid by the user, through which a dedicated electronic board, normally comprising a microprocessor or a control logic, calculates the resistance at the electrode ends, and therefore determines the liquid conductivity. Since conductivity is a function of the liquid temperature, according to known formulas, the portable conductivity probe usually comprises an electronic thermometer, which is connected at the input of such an electronic board.

As is apparent, an aquarium of this type is formed by a large number of devices and apparatuses, each completing a specific task. The only common features of these different devices and apparatuses are the single user interface and the power unit (with the exception of the portable conductivity probe).

Certainly a certain dependability is ensured since every single device or apparatus is optimized for its specific task.

Nevertheless, some drawbacks are still present.

In fact, the use of a large number of devices and apparatuses does not facilitate the use of multi-purpose hardware. It would be convenient to use a single hardware for the different tasks.

Moreover, the various devices and apparatuses do not interact in order to provide additional functions, but are only limited to their respective tasks, inhibiting the development of additional more elaborate and intelligent functionalities, which would require too much hardware resources or an interaction among the various groups.

The lack of interaction among the different devices and apparatuses represents a drawback, and also the single user interface, whose only task consists in representing parameters of the different devices and apparatuses and in setting simple commands input by the user, represents a inconvenient burden.

In fact, the single user interface is an additional device, to which power supply and connecting cables of different devices and apparatuses have to be connected, many of which are far away and require long cablings along the aquarium extension.

Moreover, the aquarium assembly is cumbersome, in that it is necessary to secure such an user interface to the aquarium surface, which involves known technical difficulties and negative aesthetics. Furthermore, the user interface usually requires a logic, comprising microprocessors or a FPGA, which have to be manufactured, installed and programmed.

It is often necessary, during the refitting of an aquarium, to install or replace certain devices or apparatuses, and therefore it may be difficult to reconnect the respective cables, in particular with a single user interface.

The use of external devices is clearly a drawback, from the practical point of view, since it requires the user to provide periodic measurements, as well as from a technical point of view, since additional hardware, like batteries, display and keypad are required.

It would be therefore desirable to simplify the aquarium, as well as to support new functions.

The technical problem to be solved by the present invention is to simplify the control of an aquarium, at the same time ensuring the development of further functionalities, in order to tend towards the creation of an intelligent aquarium.

Summary of the invention

The solution on which the present invention is based foresees grouping hardware resources which are necessary for the aquarium functions and in association to an existing device.

Based on this concept, the technical problem is solved by a filtering unit for an aquarium, said filtering unit comprising a closed casing and a liquid path extending from an inlet aperture to an outlet aperture, of the forced circulation type, by means of an electric pump provided with an electric motor, characterized in that it comprises electronic control circuits which control functions of said aquarium.

Moreover, the technical problem is also solved by an aquarium, comprising a tank for a liquid, said aquarium comprising a filtering unit hydraulically connected to said aquarium, characterized in that said filtering unit is of above said type.

Finally, the technical problem is solved by a process for automatic controlling an aquarium, comprising the following steps:

- measuring at least one aquarium status variable,

- monitoring the aquarium conditions.

The characteristics and advantages of the contacting probe and of the aquarium according to the invention will become evident from the description of an illustrative and non-limiting exemplary embodiment, with reference to the accompanying drawings.

Brief description of the drawings

In said drawings:

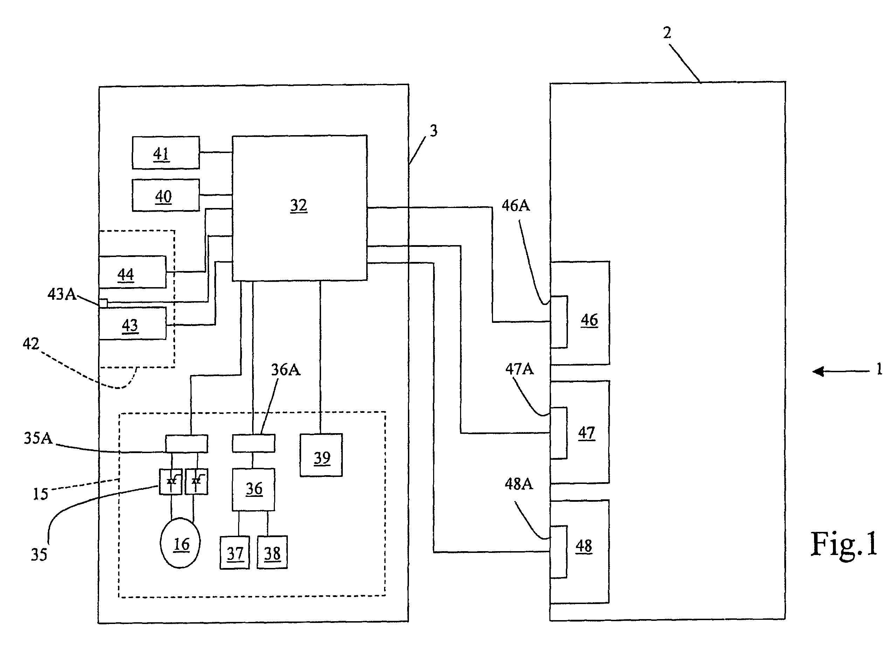

Fig. 1 shows a block diagram of the present invention, in which a filtering unit and aquarium according to the invention are illustrated,

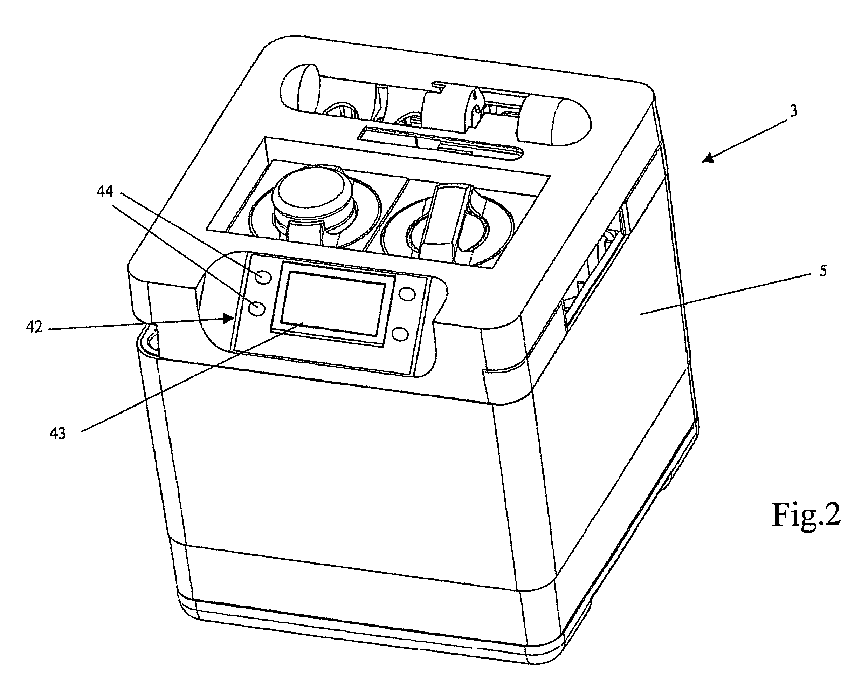

Fig. 2 shows a three-dimensional view of the filtering unit according to the invention,

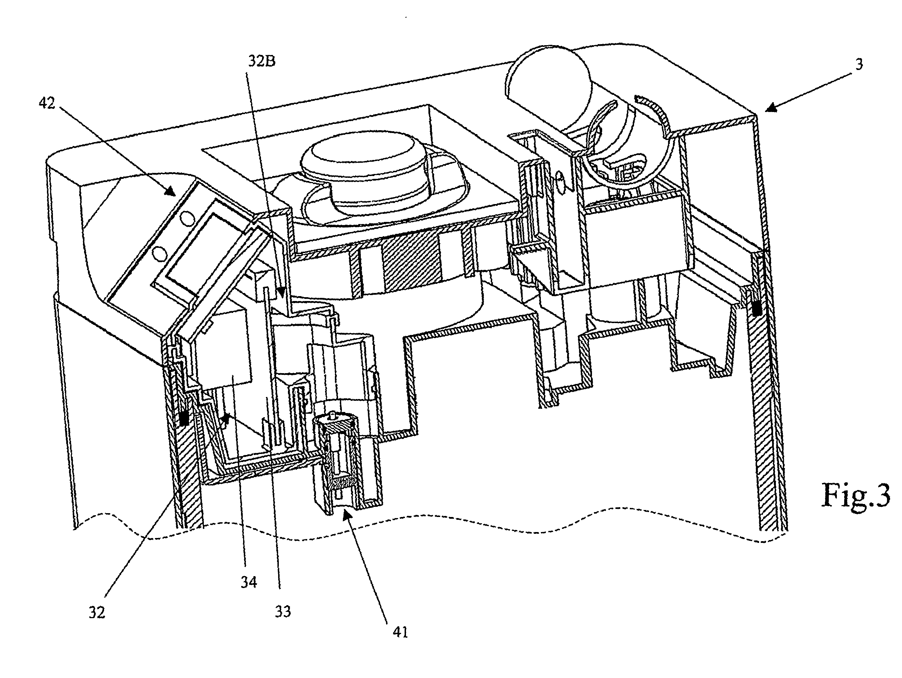

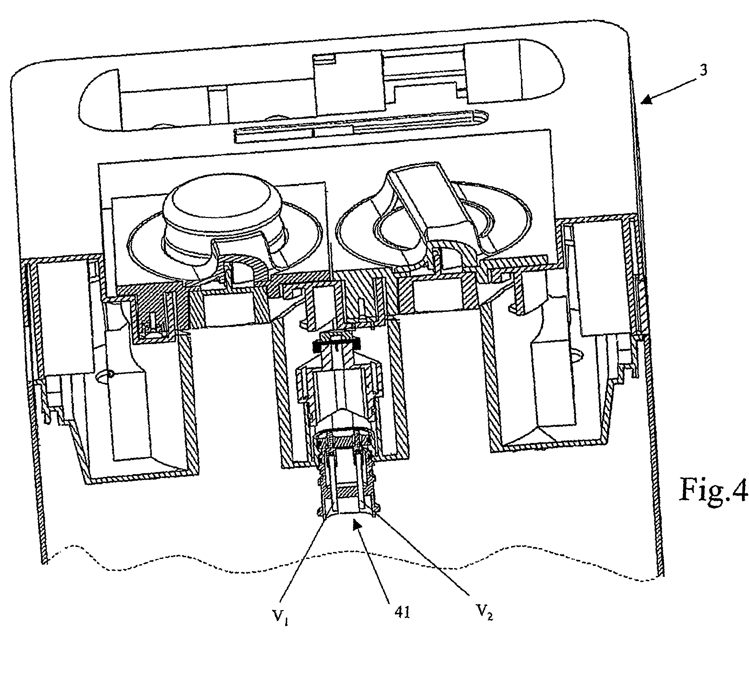

Fig. 3 and 4 show three-dimensional sections of the filtering unit of fig. 2,

Fig. 5 shows a flow/power diagram of the filtering unit of fig. 2,

Fig. 6 shows a conductivity sensor of the present invention,

Fig. 7 shows the graph of variable voltage over time inside the conductivity sensor of fig. 6.

<u>Detailed description</u>

An aquarium, generally indicated in 1, comprises a traditional tank 2, which contains fish of a certain type.

Moreover, the aquarium 1 comprises a filtering unit 3. It externally comprises an external casing 5 and is hydraulically connected to tank 2 by means of piping (not shown).

In order to let the liquid flow from tank 2 to filtering unit 3 and vice versa, an electric pump 15, known per se, is used, which comprises an electric permanent magnets synchronous motor 16, whose rotor rotates with an impeller, which pushes the liquid.

Inside the casing 5 a water tight chamber 32B is provided, as a housing for electronic control circuits 32, of the microprocessor type, which is able to control the aquarium functions. The circuits are supported by a mounting board 33, which in the present embodiment, is vertically positioned and adjacent to a power supply transformer 34.

The control circuits 32 control the operation of synchronous electric motor 16, as already known, by means of a TRIAC 35, which controls voltage at the ends of coils used for the stator of electric motor 16. An optical insulator 35A is interposed between the TRIAC 35 and electronic control circuits 32.

The control circuits 32 are moreover connected to a secondary microprocessor 36, by interposing an optical insulator 36A. This secondary microprocessor 36 receives from a voltage sensor 37, in real time, and from a current sensor 38, voltage values and current values, respectively, at the coil ends of synchronous electric motor 16, which respectively flow through coils of electric synchronous motor 16. Moreover, the secondary microprocessor 36 calculates phase shift, $\cos\varphi$, between voltage and current, according to known algorithms.

The secondary microprocessor 36 sends voltage, current and phase values, in real time, for instance by means of a serial protocol, to control circuits 32.

In the present embodiment, a Hall sensor is provided, which provides the control circuits 32 with a load angle value for the electric synchronous motor 16, in order to precisely control the operation of electric synchronous motor 16.

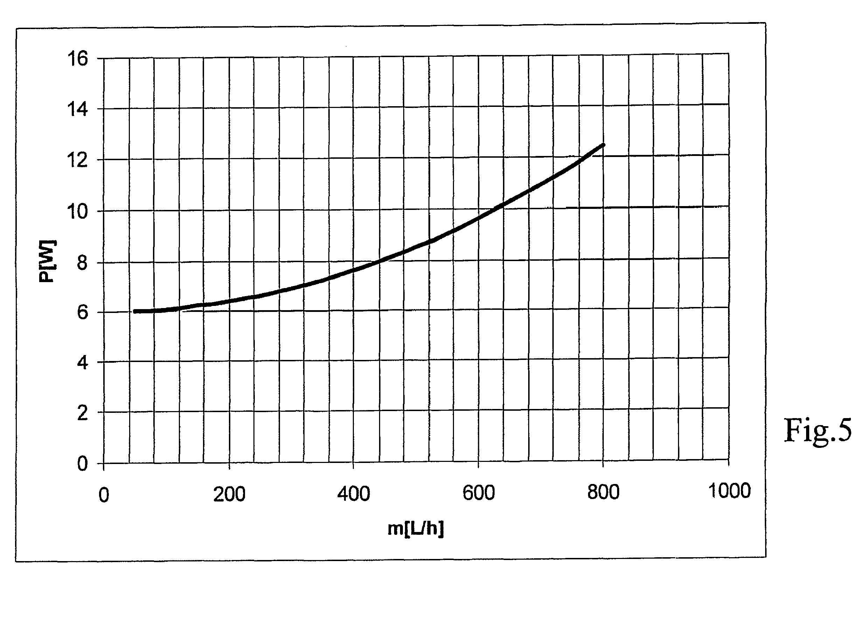

The electronic control circuits are loaded with software/firmware for recognizing the clogging condition of filtering unit 3. As can be seen in fig. 5, usually power P, which is absorbed in an aquarium by the electric pump 15 (expressed in Watt on the ordinate axis) is a function, according to known rules and experiments, of hydraulic flow rate (on the abscissa) of electric pump 15, which is in turn determined by clogging.

The electronic control circuits 32 are therefore able to recognize flow rate, and therefore the clogging rate of the filtering unit, based on absorbed power readings, by means of tables, which are preloaded in a memory of said electronic control circuits 32.

Moreover, control circuits 32 may recognize the following alarm conditions:

- unacceptably low flow rate (lower than a predetermined limit for each filtering unit type): in this case, flow rate is too low, and this implies an inadequate filtering of the aquarium, and a liquid recirculation unsuitable for fish survival,

- rotor clogged or empty electric pump (lower than the predetermined limit): user intervention or user checking is required. In particular, if the pump is empty, a pump new start up procedure is activated, until the pump is triggered, or up to a predetermined number of trials. If the pump is not triggered after this number of trials, the procedure is interrupted, with a corresponding alarm signal activated on the display.

Control circuits 32 are moreover connected on the input side to an electronic thermometer 40.

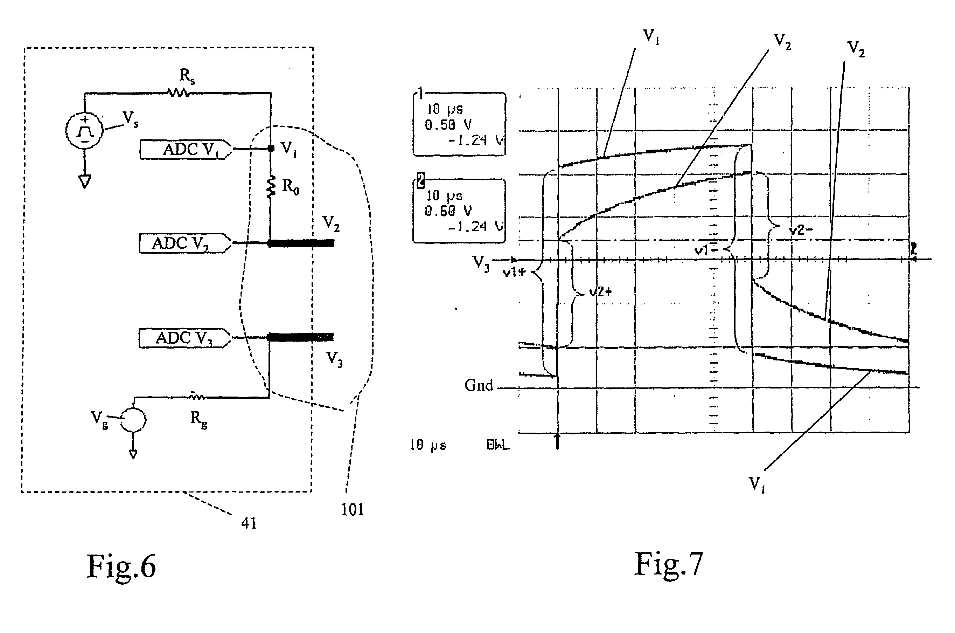

Furthermore, electronic control circuits 32 are connected on the input side to a conductivity sensor 41. As shown in fig. 6, this conductivity sensor comprises a voltage divider 101 comprising a series connected resistor Ro with known resistance, and two electrodes $V_2$ and $V_3$, contacting the aquarium liquid.

On this divider 101 a square wave voltage Vs is applied, provided by a generator, schematically indicated by a series comprised of Vs and Rs. In turn, electrode $V_3$ is biased by the series comprised of Vg and Rg.

By switching voltage Vs at high frequencies, as shown in fig. 7, it is possible to sample, by suitable samplers $ADCV_1$ and $ADCV_2$ (and optionally a third sampler $ADCV_3$) values of $V_1$ and $V_2$ in order to determine water resistance Rx, and resistivity, which is notoriously inversely proportional to conductivity.

Water resistance is calculated by means of known formulas, derived from known law of voltage division, such as:

$$(1) \qquad R_x = R_0 \frac{v_{2+}}{v_{1+} - v_{2+}}$$

$$(2) \qquad R_x = R_0 \frac{v_{2-}}{v_{1-} - v_{2-}}$$

$$(3) \qquad R_x = \frac{1}{2} R_0 \left( \frac{v_{2+}}{v_{1+} - v_{2+}} + \frac{v_{2-}}{v_{1-} - v_{2-}} \right)$$

$$(4) \qquad R_x = R_0 \left( \frac{v_{2+} - v_{2-}}{v_{1+} - v_{2+} + v_{1-} - v_{2-}} \right)$$

$v_{1+}$, $v_{2+}$ are voltage steps of $V_1$ and $V_2$ on rising fronts, $v_{1-}$, $v_{2-}$ are voltage steps of $V_1$ and $V_2$ on falling fronts.

Formula (1) is obtained by sampling values of $V_1$ and $V_2$ on rising fronts, formula (2) is obtained by sampling on falling fronts, formulas (3) and (4) are calculated as mean values, and compensate asymmetries which may be present.

The material of electrodes $V_1$ and $V_2$ is not chosen among brass, aluminum or copper, since these materials wear out by electrolysis and corrosion, in particular in case of a salt water aquarium. In this embodiment, graphite is not suitable, since it is fragile. Therefore, titanium electrodes have been used, which require a power supply frequency in the order of some dozens of kHz. Experiments conducted by the applicant have shown that these frequencies reduce the disadvantageous electrolysis current and biased voltage phenomena on contacts.

Advantageously, titanium is very corrosion resistant, even in salt water.

Based on temperature and conductivity values obtained by thermometer 40 and conductivity sensor 41 it is therefore possible for control circuits 32 to calculate temperature and conductivity, and therefore hardness and/or salt content of fluid.

The electronic control circuits 32 are connected to an user interface 42, comprising a liquid crystal display 43, for displaying, also graphically, the status variables of aquarium 1, a keypad 44, for inputting commands by the user, and beep 43A, for acoustic signaling.

User interface 42, secured to an oblique surface, is easily accessed by the user.

Control circuits 32 are connected to a lighting group 46, with an interposed optical insulator 46A.

In this way the switching on and off of aquarium lights is controlled by control circuits 32.

Control of lighting group 46 is advantageously assisted by control circuits 32, by using suitable timers, which are usually integrated into logical devices, such as microprocessors and micro-controllers.

Moreover, control circuits 32 are connected to a thermal regulation group 47, with an interposed optical insulator 47A. In this way, operation of aquarium heaters is controlled by control circuits 32.

In this embodiment, heaters do not comprise an own thermometer, but instead liquid temperature control is advantageously achieved by the electronic thermometer 40.

Moreover, control circuits 32 are connected to a feed distribution group 48, with interposition of an optical insulator 48A.

Conveniently, also the feed distribution group 48 is controlled by said timers, integrated into said logical control devices, included in control circuits 32, which are able to recognize date and time of day according to known algorithms.

Conveniently, user interface 42 provides input to control circuits, for instance when the user needs to control the operation of filtering unit 3, or to set up typical aquarium parameters, such as the environment type created by using salt/fresh water, when control over operation of lighting group 46 is needed, as well as when control over thermal regulation group 47 and operation of feed distribution group 48 is required.

Advantageously, user interface 42, by means of display 43, is able to display aquarium status variables, such as conductivity, hardness, salt content, as well as filtering unit condition, for instance a clogging condition.

Advantageously, the use of microprocessors and logical digital devices, such as memories, timer, etc., provides a graphic representation for logging the aquarium status, in order to highlight differences and readily identify anomalous situations, so that the user may introduce suitable countermeasures.

The invention provides real alarm capabilities, since deviations from standard values cause the control circuits 32 to emit error messages through the display 43, as well as by means of the beep 43A. For example, situations like a very low flow rate, a clogged rotor or a disengaged electric pump as well as conductivity values, salt content/hardness and/or temperature exceeding the normal range of operation may be notified.

Due to the optical insulators, control circuits 32 are galvanically insulated and at a secure voltage level. In this way, also the user interface 42, and in particular keypad 44 are galvanically insulated. Therefore, the user cannot cause electrical strikes or short-circuits by accidental contact, through his wet fingers, with the keypad, connecting circuits at different potentials. Therefore, even if the user interface is directly connected to the electronic control circuits, without the optical insulators, it is nevertheless insulated from other electrical devices, such as the electric motor 16 and groups 46, 47 and 48.

A process according to the invention comprises the following steps:

- measuring at least one status variable of the aquarium,

- monitoring the aquarium condition,

- preferably, notification the aquarium condition, for example by issuing an alarm.

Examples of status variables are temperature, conductivity, hardness and salt content of water.

For temperature measurement, an electronic thermometer may be used.

For conductivity measurements, a conductivity sensor may be employed, wherein a square wave voltage is set on the voltage divider, comprising a resistor $(R_o)$ of known resistance and a pair of electrodes contacting water and voltage sampling at the ends of a component of said divider.

Salt content measurement in a salt water aquarium is achieved by use of suitable tables and or typical formulas, which relate salt content values to conductivity values.

Hardness measurement, in a fresh water aquarium, is achieved by use of suitable tables and/or typical formulas, which relate salt content values to conductivity values.

It is to be noted that temperature and conductivity are measured by means of sensors like the already described electronic thermometer 40 and conductivity sensor 41, which operate inside the filtering unit: advantageously, there is no need to submerse mobile devices inside the tank.

Monitoring of aquarium conditions may be achieved, with respect to temperature, conductivity, hardness, water salt content, by setting limiting values, which should never be exceeded.

With respect to temperature control, it is also possible to operate a thermal regulation group, like the thermal regulation group 47, in order to heat up the water up to the needed temperature.

The aquarium status notification, concerning temperature, conductivity, hardness, salt content of water, is provided by displaying, preferably in a graphical form, of measured and/or calculated values on a display.

If said aquarium monitoring detects a limit value being exceeded, an alarm is issued, for instance by visual and acoustic signals, if required in a prolonged and intermittent fashion.

Among aquarium status variables, also voltage, current, power P, cosφ of electric motor of the electric pump of filtering unit, may be taken into account, by using above said means 36, 37, 38.

A further aquarium status variable is water flow rate m flowing through the electric pump. This flow rate m (fig. 5) is directly related to the power absorbed by electric pump, so that it is possible to determine flow rate m, based on preset tables and/or calculations.

Since a minimum value for the pump flow rate is set, under which the pump is considered to be clogged, monitoring aquarium conditions also comprises verifying if said minimum value is exceeded.

Finally, power P, if throttled down to 0, indicates that the pump is disengaged.

Therefore, power P represents a further control parameter for aquarium status.

Advantageously, according to the invention, an unprecedented degree of interaction among various devices is achieved.

Moreover, further upgrading is facilitated, since it is easy to modify the software stored in the central control unit.

For example, by using a very simple timer, the electronic control circuits may be efficiently used for instance to adjust the lighting at predetermined hours or days of week.

Moreover, further configurations may foresee the connection of said control circuits to a PC, in order to remotely control the aquarium, for instance over the internet.

The fact that the filtering unit at the same time contains the electronic control circuits, the electronic thermometer and the conductivity sensor allows for further advantages, since long cables between the electronic control circuits and the tank for measuring the aquarium status variables are avoided.

Furthermore, if the filtering unit is of the external type, it is also easily accessible by the user, facilitating the electronic circuits' servicing.

**Claims**

1. Filtering unit (3) for an aquarium (1), said filtering unit comprising a closed casing (5) and a liquid path extending from an inlet aperture to an outlet aperture, of the forced circulation type, by means of an electric pump (15) provided with an electric motor (16), **characterized in that** it comprises electronic control circuits (32) which control functions of said aquarium (1).

2. Filtering unit according to claim 1, **characterized in that** said electronic control circuits (32) control said electric pump (15), in particular said electric motor (16).

3. Filtering unit according to claim 1 or 2, **characterized in that** said electric motor (16) is a permanent magnets synchronous electric motor.

4. Filtering unit according to claim 3, **characterized in that** said electric motor (16) is controlled by TRIAC (35).

5. Filtering unit according to any of claims 2-4, **characterized in that** an optical insulator (35A) is interposed between said electric motor (16) and said filtering unit (3).

6. Filtering unit according to any of claims 2-5, **characterized in that** said electronic control circuits (32) are connected, on the input side, to a Hall probe (39), which is disposed inside said electric pump (15).

7. Filtering unit according to any of the preceding claims, **characterized in that** said electronic control circuits (32) are connected, on the input side, in order to receive from a voltage sensor (37), the voltage value applied to said electric motor (16).

8. Filtering unit according to any of the preceding claims, **characterized in that** said electronic control circuits (32) are connected on the input side in order to receive from a current sensor (38) the current value applied to said electric motor (16).

9. Filtering unit according to any of claims 7 or 8, **characterized in that** between said electronic control circuits (32) and said current and/or voltage sensors a secondary microprocessor (35) is interposed, which is able to provide to said electronic control circuits (32) the current and/or voltage values, in real time, wherein in particular said secondary microprocessor (35) may provide in real time said electronic control circuits (32) with the value of power (P) used by said electric motor (16) and/or $\cos\varphi$.

10. Filtering unit according to claim 9, **characterized in that** between said electronic control circuits (32) and said secondary microprocessor (35) an optical insulator (36A) is inserted.

11. Filtering unit according to any of the preceding claims, **characterized in that** said electronic control circuits (32) are connected, on the input side, to an electronic thermometer (40), in order to obtain water temperature of said aquarium (1).

12. Filtering unit according to claim 11, **characterized in that** said electronic thermometer (40) is housed inside said filtering unit (16), in order to measure tank water temperature.

13. Filtering unit according to any of the preceding claims, **characterized in that** said electronic control circuits (32) are connected, on the input side, to a conductivity sensor (41).

14. Filtering unit according to claim 13, **characterized in that** said conductivity sensor (41) is provided inside said filtering unit.

15. Filtering unit according to any of claims 13 or 14, **characterized in that** said conductivity sensor (41) comprises a voltage divider (101) comprising a series circuit comprising:

   - a resistor (Ro),
   - a pair of electrodes ($V_1$, $V_2$) contacting water,

wherein said conductivity sensor may calculate the water conductivity based on the voltage distribution on said divider.

16. Filtering unit according to claim 15, **characterized in that** said conductivity sensor comprises a square wave voltage generator (Vs), connected to said voltage divider (101), wherein samplers ($ADCV_1$, $ADCV_2$) are provided, to sample voltage values ($v_{1+}$, $v_{1-}$, $v_{2+}$, $v_{2-}$) on the rising and/or falling fronts of said square wave.

17. Filtering unit according to any of claims 15 or 16, **characterized in that** said electrode pair is made of titanium, said square wave (Vs) being of the order of tens of kHz.

18. Filtering unit according to any of the preceding claims, **characterized in that** said electronic control circuits (32) are connected to at least one of the following external groups:

   - a lighting group (46),
   - a thermal regulation group (47),
   - a feed distribution group (48),

in order to control the operation of said at least one group (46, 47, 48).

19. Filtering unit according to claim 18, **characterized in that** between said electronic control circuits (32) and said groups (46, 47, 48) optical insulators (46A, 47A, 48A) are inserted.

20. Filtering unit according to any of the preceding claims, **characterized in that** it comprises an user interface (42) for setting user commands and for notifying the aquarium condition (1) by means of said electronic circuits (32).

21. Filtering unit according to claim 20, **characterized in that** said user interface (42) comprises a keypad (44) for setting user commands.

22. Filtering unit according to any of claims 20 or 21, **characterized in that** said user interface (42) comprises a display, in particular a liquid crystal display, and/or an acoustic beep (43A) for signaling aquarium conditions, in particular in case of alarms.

23. Filtering unit according to claim 21, **characterized in that** said user interface (42) is directly connected to said electronic control circuits (32), without optical insulators.

24. Aquarium (1), comprising a tank (2) for receiving liquid, said aquarium comprising a filtering unit (3), which is hydraulically connected to said aquarium (1), **characterized in that** said filtering unit (3) is provided according to any of preceding claims.

25. Process for automatic controlling an aquarium, comprising the following steps:

   - measuring at least one aquarium status variable,
   - monitoring the aquarium conditions.

26. Process according to claim 25, **characterized in that** it comprises a further notification step regarding the aquarium conditions, in particular an alarm.

27. Process according to any of claims 25 or 26, **characterized in that** said at least one aquarium status variable comprises at least one of temperature, conductivity, hardness, salt content of water.

28. Process according to claim 27, **characterized in that** said water conductivity measurement is achieved by:

   - applying a square wave voltage on a voltage divider (101) comprising a resistor (Ro) of known resistance and a pair of electrodes ($V_2$, $V_3$) contacting water,
- sampling the voltage at the ends of one component (R0, V1, V2) of said divider (101).

**29.** Process according to any of claims 25-28, **characterized in that** said control step comprises checking exceeding of maximum admissible values for at least one status variable, being provided the visual and/or acoustic signaling of said variables, in particular in an alarm situation.

**30.** Process according to any of claims 27-29, **characterized in that** said control step comprises heating water up to a preset temperature.

**31.** Process according to any of claims 25-30, **characterized in that** said status variable comprises power (P) absorbed by motor (16) of an electric pump (15).

**32.** Process according to claim 31, **characterized in that** said measuring step comprises comparing said power (P) to preset tables, in order to estimate flow rate (m) of said electric pump (15).

**33.** Process according to claim 32, **characterized in that** said control step comprises comparing said flow rate (m) to a minimum flow rate value, in order to recognize a clogging condition of said electric pump (15) and/or a disengagement condition of said electric pump.

Fig.1

Fig.2

Fig.3

EP 2 071 945 A1

Fig.4

Fig.5

Fig.7

Fig.6

**European Patent Office**

**EUROPEAN SEARCH REPORT**

Application Number

EP 07 42 5816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 680 080 A (ELINEAU BERNARD [FR]) 12 February 1993 (1993-02-12)<br><br><br>* page 2, lines 1-23 *<br>* page 4, lines 4-34 *<br>* page 5, lines 11-32 *<br>* page 6, lines 14-35 *<br>* figures 1,2,4-7 *<br>----- | 1,2,11, 12,18, 20-22, 24-27, 29,30 | INV.<br>A01K63/04 |
| X | WO 02/069701 A (ECODECO B V [NL]; HENKEMANS PETER ALEXANDER [NL]) 12 September 2002 (2002-09-12)<br><br><br>* page 3, line 32 - page 5, line 12 *<br>* page 12, line 16 - page 13, line 3 *<br>* figures 1,2 *<br>----- | 1,2, 11-14, 18,20, 24,25, 27,30 | |
| X | EP 0 253 542 A (SCHROEDER RONDON L [US]; GOHEEN BERNIE R [US]; NASBY ROBERT D [US]) 20 January 1988 (1988-01-20)<br>* column 2, line 47 - column 3, line 18 *<br>* column 3, line 27 - column 4, line 25 *<br>* column 4, line 50 - column 5, line 58 *<br>* column 6, line 29 - column 7, line 10 *<br>* figures 1-3 *<br>----- | 1-5,11, 18-27, 29,30 | TECHNICAL FIELDS SEARCHED (IPC)<br><br>A01K |

-/--

The present search report has been drawn up for all claims

| Place of search | Date of completion of the search | Examiner |
|---|---|---|
| The Hague | 21 May 2008 | Been, Mathieu |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**European Patent Office**

## EUROPEAN SEARCH REPORT

Application Number

EP 07 42 5816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/251461 A1 (REICHARD CHRISTOPHER D [US] ET AL) 1 November 2007 (2007-11-01) * page 2, paragraphs 14,15,19,20 * * page 3, paragraph 43 * * page 4, paragraph 47 - page 5, paragraph 49 * * page 5, paragraph 51 * * page 5, paragraph 53 - page 6, paragraph 58 * * page 7, paragraphs 64,65 * * figures 1A,1B,2,3A,3B,5,8,9 * ----- | 1,2,5, 11,15-31 | |

TECHNICAL FIELDS SEARCHED (IPC)

The present search report has been drawn up for all claims

| Place of search | Date of completion of the search | Examiner |
|---|---|---|
| The Hague | 21 May 2008 | Been, Mathieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 42 5816

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2008

| Patent document cited in search report | | Publication date | Patent family member(s) | | Publication date |
|---|---|---|---|---|---|
| FR 2680080 | A | 12-02-1993 | NONE | | |
| WO 02069701 | A | 12-09-2002 | AT | 274297 T | 15-09-2004 |
| | | | AU | 2002236358 B2 | 17-08-2006 |
| | | | DE | 60201072 D1 | 30-09-2004 |
| | | | DE | 60201072 T2 | 27-01-2005 |
| | | | EP | 1365644 A1 | 03-12-2003 |
| | | | ES | 2227426 T3 | 01-04-2005 |
| | | | NL | 1017537 C2 | 10-09-2002 |
| | | | PT | 1365644 T | 29-10-2004 |
| | | | US | 2004074840 A1 | 22-04-2004 |
| EP 0253542 | A | 20-01-1988 | US | 4773008 A | 20-09-1988 |
| US 2007251461 | A1 | 01-11-2007 | NONE | | |

EPO FORM P0459

For more details about this annex : see Official Journal of the European Patent Office, No. 12/82